# EUROPÄISCHE PATENTSCHRIFT

(11) **EP 3 194 243 B1**
(45) Veröffentlichungstag und Bekanntmachung des Hinweises auf die Patenterteilung: **27.03.2019**
(21) Anmeldenummer: 15787936.2
(22) Anmeldetag: 22.10.2015
(51) Int. Cl.: B61L 23/14, B61L 27/04, B61L 27/00, B61L 15/00, B61L 25/02

(54) **VERFAHREN ZUM DURCHFÜHREN EINES AUTOMATISCHEN ZUGVERKEHRS UND ZUGVERKEHRSSYSTEM ZUM DURCHFÜHREN EINES AUTOMATISCHEN ZUGVERKEHRS**
METHOD FOR IMPLEMENTING AUTOMATIC RAILWAY TRAFFIC, AND RAILWAY TRAFFIC SYSTEM FOR IMPLEMENTING AUTOMATIC RAILWAY TRAFFIC
PROCÉDÉ DE MISE EN OEUVRE D'UNE CIRCULATION AUTOMATIQUE DE TRAINS ET SYSTÈME DE CIRCULATION DES TRAINS PERMETTANT LA MISE EN OEUVRE D'UNE CIRCULATION AUTOMATIQUE DE TRAINS

(30) Priorität: 13.11.2014 DE 102014223195
(43) Veröffentlichungstag der Anmeldung: 26.07.2017
(73) Patentinhaber: Siemens Mobility GmbH, 81739 München (DE)
(72) Erfinder: BECKE, Lothar, 38154 Königslutter (DE)
(86) Internationale Anmeldenummer: PCT/EP2015/074526
(87) Internationale Veröffentlichungsnummer: WO 2016/074900

(56) Entgegenhaltungen:
- US-A1- 2013 218 375
- US-B1- 8 751 072
- L. Lindqvist ET AL: "Application of communication based Moving Block systems on existing metro lines" In: "Advanced Train Control Systems", 29. Juni 2010 (2010-06-29), WIT Press, XP055126662, ISBN: 978-1-84564-494-9 Bd. 1, Seiten 391-400, Kapitel 4.2.3 - 4.2.5; Seite 62 - Seite 64
- POLLACK M W: "Communications-based signaling: advanced capability for mainline railroads", VEHICULAR TECHNOLOGY CONFERENCE, 1996. MOBILE TECHNOLOGY FOR THE HUMAN RACE., IEEE 46TH ATLANTA, GA, USA 28 APRIL-1 MAY 1996, NEW YORK, NY, USA,IEEE, US, Bd. 3, 28. April 1996 (1996-04-28), Seiten 1599-1603, XP010162625, DOI: 10.1109/VETEC.1996.506097 ISBN: 978-0-7803-3157-0

## Beschreibung

Die Erfindung betrifft ein Verfahren zum Durchführen eines automatischen Zugverkehrs mit einer automatischen Zugsteuerung und Zugsicherung mittels Datenkommunikation zwischen einer Bordeinrichtung jeweils eines automatischen Zuges und einer Streckeneinrichtung (vergleiche beispielsweise US 2013/218375 A1).

Verfahren dieser Art sind beispielsweise als CBTC (Communications-Based Train Control)-Verfahren bekannt. Bei diesen bekannten Verfahren werden automatische Zugsteuerungs- und Zugsicherungssystem eingesetzt, bei denen die Fahrerlaubnis und Steuerungsbefehle über eine Datenkommunikation zwischen der Streckeneinrichtung und der Bordeinrichtung erteilt werden; entsprechend sind die Streckeneinrichtung und die Bordeinrichtungen der automatischen Züge ausgebildet. So signalisiert ein automatischer Zug ständig jeweils die Position seines frontseitigen Endes und die seines hinteren Endes durch Positionstelegramme an die Streckeneinrichtung.

Bewegen sich im automatischen Zugverkehr auch lokomotivenbewegte Züge, also spezielle Züge, die aus ihrer Lokomotive heraus nur die jeweilige Position des frontseitigen Endes der Lokomotive signalisieren, dann dürfen solche Züge nur in einem eingeschränkten Modus fahren, was den Verkehr mit den automatischen Zügen behindert.

Der Erfindung liegt die Aufgabe zugrunde, ein Verfahren der eingangs angegebenen Art so auszugestalten, dass lokomotivenbewegte Züge ohne Behinderungen des Verkehrs mit automatischen Zügen zusammen mit den automatischen Zügen verkehren können.

Zur Lösung dieser Aufgabe wird erfindungsgemäß beim Verfahren nach Anspruch 1 zur Integration eines lokomotivenbewegten Zuges mit Aussendung eines die Frontposition der Lokomotive bezeichnenden Positionssignals in den automatischen Zugverkehr in der Streckeneinrichtung auf ein empfangenes Positionssignal der Lokomotive eine elektronische Dauermarke fest zugeordnet, wodurch der lokomotivenbewegte Zug von der Streckeneinrichtung dauerhaft als ein kurzer automatischer Zug behandelt und der sich jeweils nach hinten erstreckende Teil eines von dem lokomotivenbewegten Zug jeweils befahrenen und mit physikalischen Marken begrenzten Gleisabschnitts blockiert wird. Dabei wird unter einem lokomotivenbewegten Zug sowohl ein Zug mit einer Lokomotive mit angehängten Wagen als auch eine Lokomotive allein verstanden.

Ein wesentlicher Vorteil des erfindungsgemäßen Verfahrens wird darin gesehen, dass es die Möglichkeit schafft, lokomotivenbewegte Züge wie automatische Züge am automatischen Zugverkehr ohne Einschränkungen teilnehmen zu lassen. Ein weiterer Vorteil besteht darin, dass diese Möglichkeit mit relativ geringem Aufwand geschaffen werden kann, weil es nicht erforderlich ist, eine Funktion zur Überwachung der Vollständigkeit eines lokomotivenbewegten Zuges in der Bordeinrichtung der Lokomotive eines solchen Zuges vorzusehen; die beim automatischen Zugverkehr vorhandene Ausrüstung wird zur Integration der lokomotivenbewegten Züge eingesetzt. Vorteilhaft ist außerdem, dass sich bei dem erfindungsgemäßen Verfahren eine Flotte aus automatischen und lokomotivenbewegten Zügen ohne gegenseitige Behinderungen im automatischen Zugverkehr bewegen lässt.

Die Verfolgung des lokomotivenbewegten Zuges kann bei dem erfindungsgemäßen Verfahren in verschiedener Weise erfolgen. Um das erfindungsgemäße Verfahren diesbezüglich möglichst einfach durchführen zu können, wird in der Streckeneinrichtung für die Verfolgung eines lokomotivenbewegten Zuges die Funktion der Überprüfung des hinteren Endes eines automatischen Zuges unwirksam gestellt und zur Separierung aufeinander folgender Züge auf eine Gleisfreimeldung umgeschaltet. Damit wird sichergestellt, dass aufeinander folgende Züge voneinander separiert sicher verkehren können, ohne das die Vollständigkeit eines Zuges erfasst werden muss.

Bei einer weiteren vorteilhaften Ausführungsform des erfindungsgemäßen Verfahrens wird bei einer Erweiterung auf ein CTC (Continuous Train Control)-Verfahren, d.h. ein Verfahren mit kontinuierlicher Zugbeeinflussung, - siehe Siemens Publikation "Trainguard MT", 2010, S. 4, Order-No.:A19100-V100-B834-V4-7600 - dem lokomotivenbewegten Zug eine Ausgangslänge zugeordnet, die der maximal zugelassenen Länge der lokomotivenbewegten Züge unter Berücksichtigung ihres jeweiligen Bremsmodells entspricht. Damit ist ein sicherer Verkehr mit den lokomotivenbewegten Zügen gewährleistet.

Bei einer besonders vorteilhaften Ausführungsform des erfindungsgemäßen Verfahrens wird zur Ermittlung der Zuglänge eines lokomotivenbewegten Zuges mit Aussendung eines die Frontposition der Lokomotive bezeichnenden Positionssignals zu der Streckeneinrichtung bei einer Freimeldung über das Verlassen eines mit physikalischen Marken begrenzten Gleisabschnitts durch den lokomotivenbewegten Zug mittels des dann gesendeten Positionssignals die entsprechende Frontposition der Lokomotive des lokomotivenbewegten Zuges erfasst und der Abstand zwischen der erfassten Frontposition und dem gerade verlassenen Gleisabschnitt als ermittelte Zuglänge durch die Streckeneinrichtung dargestellt.

Ein wesentlicher Vorteil dieser Ausführungsform des erfindungsgemäßen Verfahrens wird darin gesehen, dass mit ihm die jeweilige Länge des lokomotivenbewegten Zuges zuverlässig festgestellt bzw. überwacht werden kann, so dass es nicht erforderlich ist, dass diese Länge vom Zugführer angegeben wird; auch ist es nicht notwendig, von einer maximal zugelassenen Zuglänge der lokomotivenbewegten Züge auszugehen. Aufgrund der ermittelten Zuglänge des lokomotivenbewegten Zuges besteht ferner die vorteilhafte Möglichkeit, dass ein lokomotivenbewegter Zug von einem Bahnhof oder aus einem Streckenabschnitt mit Geschwindigkeitsbeschränkung ausfahrend nach einer optimal kurzen Zeit beschleunigt werden kann.

Bei einer weiteren vorteilhaften Ausführungsform des erfindungsgemäßen Verfahrens wird die Ermittlung der Zuglänge durch die Streckeneinrichtung beim Verlassen mehrerer jeweils gerade verlassener Gleisabschnitte durchgeführt. Dadurch wird nicht nur die Zuglänge des jeweiligen lokomotivenbewegten Zuges zuverlässig festgestellt, sondern auch die Möglichkeit geschaffen, die Integrität des lokomotivenbewegten Zuges während seiner Fahrt zu überwachen.

In dieser Hinsicht besonders vorteilhaft ist es, wenn bei dem erfindungsgemäßen Verfahren die Ermittlung der Zuglänge durch die Streckeneinrichtung beim Verlassen jedes Gleisabschnitts durchgeführt wird.

Das erfindungsgemäße Verfahren kann allgemein im automatischen Zugverkehr angewendet werden. Als vorteilhaft wird es erachtet, wenn bei dem erfindungsgemäßen Verfahren der automatische Zugverkehr nach dem CBTC (Communications Based Train Control)-Verfahren durchgeführt wird, wobei die Fahrbefehle für die lokomotivenbewegten Züge gemäß den Vorschriften des CBTC-Verfahrens nach den Regeln für automatische Züge gegeben werden. CBTC-Verfahren sind gut eingeführt, so dass mit der Erfindung die Einsatzmöglichkeiten solcher Verfahren verbreitert werden.

Bei einem Einsatz des erfindungsgemäßen Verfahrens bei einem CBTC-Verfahren ist es in vorteilhafter Weise möglich, von der Streckeneinrichtung mit dem Fahrbefehl zur Bordeinrichtung der Lokomotive des lokomotivenbewegten Zuges eine Längen-Information über die aktuell ermittelte Zuglänge des lokomotivenbewegten Zuges zu übermitteln von der Bordeinrichtung diese Längeninformation übernehmen zu lassen.

Bei einer weiteren vorteilhaften Ausführungsform des erfindungsgemäßen Verfahrens wird die zuletzt ermittelte aktuelle Zuglänge des lokomotivenbewegten Zuges verlängert, wenn das aufgrund der zuletzt aktuell ermittelten Zuglänge erwartete Verlassen des jeweiligen Gleisabschnitts innerhalb einer vorgegebenen Zeitspanne nicht erfolgt ist, wobei die Verlängerung bis zum ersten freien Gleisabschnitt oder um eine Strecke erfolgt, die der maximal zugelassenen Zuglänge der lokomotivenbewegten Züge unter Berücksichtigung ihres jeweiligen Bremsmodells entspricht, je nachdem, welche Längenabmessung kürzer ist. Dadurch wird das erfindungsgemäßen Verfahren der Situation gerecht, dass ein Fahrzeug des lokomotivenbewegten Zuges verloren gegangen ist, also die Integrität des Zuges gestört ist, oder ein nachfolgender Zug die Vorgabe, einen Streckenabschnitt hinter dem lokomotivenbewegten Zug freizuhalten, nicht eingehalten hat.

Die Erfindung betrifft ferner ein Zugverkehrssystem gemäss Anspruch 10 zum Durchführen eines automatischen Zugverkehrs mit einer automatischen Zugsteuerung und Zugsicherung mittels Datenkommunikation zwischen einer Bordeinrichtung jeweils eines automatischen Zuges und einer Streckeneinrichtung, wie es beispielsweise mit einem CBTC-Verfahren betrieben wird.

Um ein solches Zugverkehrssystem so auszugestalten, dass lokomotivenbewegte Züge ohne Behinderungen des Verkehrs mit automatischen Zügen zusammen mit den automatischen Zügen verkehren können, ist erfindungsgemäß zur Integration eines lokomotivenbewegten Zuges mit Aussendung eines die Frontposition der Lokomotive bezeichnenden Positionssignals in den automatischen Zugverkehr die Streckeneinrichtung geeignet, auf ein empfangenes Positionssignal der Lokomotive des lokomotivenbewegten Zug eine elektronische Dauermarke fest zuzuordnen, den lokomotivenbewegten Zug dauerhaft als einen kurzen automatischen Zug zu behandeln und den sich jeweils nach hinten erstreckenden Teil eines von dem lokomotivenbewegten Zug jeweils befahrenen und mit physikalischen Marken begrenzten Gleisabschnitts zu blockieren.

Damit lassen sich sinngemäß die gleichen Vorteile erzielen, wie sie oben zum erfindungsgemäßen Verfahren angegeben sind.

Bei einer vorteilhaften Ausführungsform des erfindungsgemäßen Zugverkehrssystems ist die Streckeneinrichtung geeignet, bei einer Erweiterung auf ein CTC-Verfahren dem lokomotivenbewegten Zug eine Ausgangslänge zuzuordnen, die der maximal zugelassenen Länge der lokomotivenbewegten Züge unter Berücksichtigung ihres jeweiligen Bremsmodells entspricht.

Als besonders vorteilhaft wird es angesehen, wenn zur Ermittlung der Zuglänge eines lokomotivenbewegten Zuges mit Aussendung eines seine jeweilige Frontposition bezeichnenden Positionssignals die Streckeneinrichtung geeignet ist, auf ein empfangenes Positionssignal bei einer Freimeldung über das Verlassen eines mit physikalischen Marken begrenzten Gleisabschnitts durch den lokomotivenbewegten Zug mittels des dann gesendeten Positionssignals die entsprechende Frontposition der Lokomotive des lokomotivenbewegten Zuges zu erfassen und den Abstand zwischen der erfassten Frontposition und dem gerade verlassenen Gleisabschnitt als ermittelte Zuglänge darzustellen.

Bei dem erfindungsgemäßen Zugverkehrssystem ist die Streckeneinrichtung vorteilhafterweise ferner geeignet, mit dem Fahrbefehl zur Bordeinrichtung der Lokomotive des lokomotivenbewegten Zuges eine Längen-Information über die aktuell ermittelte Länge des lokomotivenbewegten Zuges zu übermitteln, und die Bordeinrichtung ist geeignet, diese Längeninformation zu übernehmen.

Um bei dem erfindungsgemäßen Zugverkehrssystem einen Hinweis auf eine gestörte Integrität des lokomotivenbewegten Zuges oder auf einen Zug in einem Streckenabschnitt hinter dem gerade von dem lokomotivenbewegten Zug verlassenen Streckenabschnitt zu erhalten, ist die Streckeneinrichtung geeignet, die zuletzt ermittelte aktuelle Zuglänge des lokomotivenbewegten Zuges zu verlängern, wenn das aufgrund der zuletzt aktuell ermittelten Länge erwartete Verlassen des jeweiligen Gleisabschnitts innerhalb einer vorgegebenen Zeitspanne nicht erfolgt ist, wobei die Verlängerung bis zum ersten freien Gleisabschnitt oder um eine Strecke erfolgt, die der maximal zugelassenen Länge der lokomotivenbewegten Züge unter Berücksichtigung ihres jeweiligen Bremsmodells entspricht, je nachdem, welche Längenabmessung kürzer ist.

Zur weiteren Erläuterung der Erfindung ist in
- Fig. 1: schematisch ein Ausschnitt aus einem Ausführungsbeispiel des erfindungsgemäßen Zugverkehrssystems zur Darstellung der Wirkungsweise des erfindungsgemäßen Verfahrens, in
- Fig. 2: schematisch ein Ausschnitt aus einem Ausführungsbeispiel des erfindungsgemäßen Zugverkehrssystems zur Darstellung der Ermittlung der Zuglänge und in
- Fig. 3: schematisch ein weiterer Ausschnitt aus einem Ausführungsbeispiel des erfindungsgemäßen Zugverkehrssystems zur Darstellung der Ermittlung einer verlängerten Zuglänge
gezeigt.

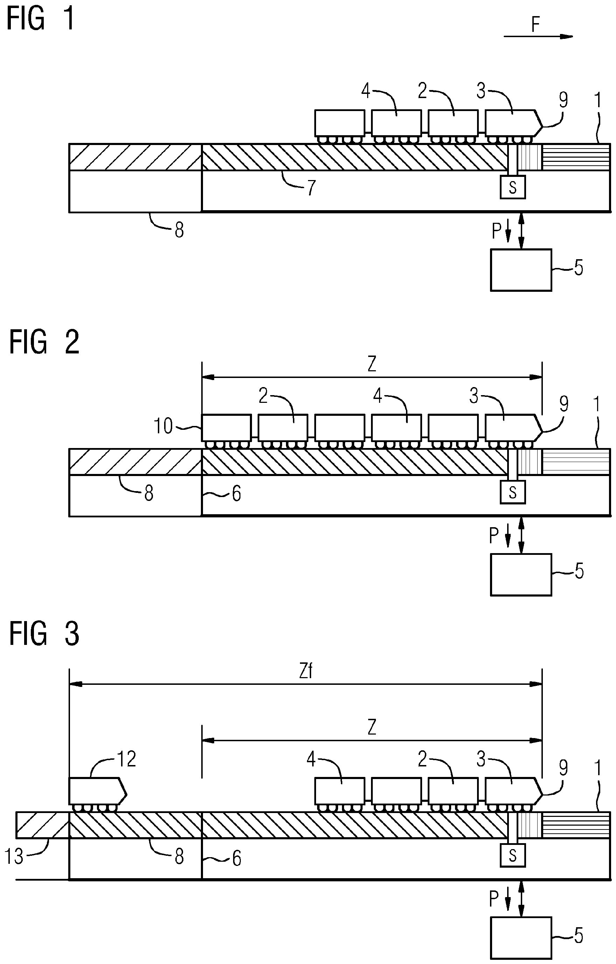

Fig. 1 zeigt einen Teil einer Strecke eines Zugverkehrssystems; auf einem Gleisabschnittschnitt 1 des dargestellten Teils befindet sich in Fahrtrichtung F ein lokomotivenbewegter Zug 2, der aus einer Lokomotive 3 mit angehängten Wagen 4 besteht. Dabei wird unter einer "Lokomotive" generell ein separates Triebfahrzeug verstanden, an das Wagen ebenfalls als separate Einheiten in unterschiedlicher Anzahl angekoppelt sind - im dargestellten Ausführungsbeispiel drei - Wagen. Außerdem verkehren auf der Strecke automatische Züge, die nicht dargestellt sind. Auf der Strecke wird nämlich ein "gemischter" Verkehr abgewickelt, wobei es sich hier um einen Verkehr mit automatischen Zügen und lokomotivenbewegten Zügen handelt.

Die Lokomotive 3 ist mit einer - nicht gezeigten - Bordeinrichtung ausgerüstet, die ein die jeweilige Frontposition des Zuges 2 bezeichnendes Positionssignal P aussendet. Dieses Positionssignal P wird von einer Streckeneinrichtung 5 empfangen und verarbeitet. Empfängt die Streckeneinrichtung 5 ein Positionssignal P von dem Zug 2, dann erkennt es anhand einer speziellen Struktur dieses Signals, dass es sich nicht um das Positionssignal eines automatischen Zuges handelt, sondern um das Positionssignal P eines lokomotivenbewegten Zuges 2. Auf das Positionssignal P hin wird in der Streckeneinrichtung 5 dem lokomotivenbewegten Zug 2 eine elektronische Dauermarke S zugeordnet und damit der lokomotivenbewegte Zug 2 von der Streckeneinrichtung 5 dauerhaft als ein automatischer Zug behandelt. Außerdem wird der sich nach hinten bis zu einer physikalischen Marke 6 erstreckende Teil 7 des Gleisabschnitts 1 blockiert. Dazu gehört hier auch, dass die Funktion der Überprüfung des hinteren Endes 6 des lokomotivenbewegten Zuges 2 in der Streckeneinrichtung 5 unwirksam gestellt wird; bei automatischen Zügen wird nämlich auch das hintere Ende erfasst. Es wird von der Streckeneinrichtung 5 stattdessen im Falle des lokomotivenbewegten Zuges 2 auf eine Gleisfreimeldung eines weiteren Gleisabschnitts 8 umgeschaltet. In Fig. 1 ist in einem waagerechten, oberen Balken mit einer Rechtsschraffur ein freier Gleisabschnitt, mit einer Linksschraffur ein besetzter Gleisabschnitt, mit einer waagerechten Schraffur ein vor der Dauermarke S liegender, vom vorderen Teil der Lokomotive besetzter Gleisteil und mit einer senkrechten Schraffur ein bis zum nächsten Gleisabschnitt liegender, freier Gleisteil gekennzeichnet, wie sie aus der Sicht der Streckeneinrichtung 5 vorliegen. Ein waagerechter, unterer Balken gibt die Zustände auf den verschiedenen Gleisabschnitten wieder, wie sie die Gleisfreimeldung erkennt; schmal gezeichnete Bereiche stehen für freie Abschnitte, dünn gezeichnete Bereiche markieren besetzte Abschnitte.

Der insoweit in den automatischen Zugverkehr integrierte, lokomotivenbewegte Zug 2 signalisiert also nicht sein hinteres Ende 6. Deshalb ist vorgesehen, die Zuglänge des Zuges 2 zu ermitteln, was nachfolgend anhand der Fig. 2 erläutert wird; dabei sind in Fig. 2 für mit Elementen der Fig. 1 übereinstimmende Elemente die gleichen Bezugszeichen verwendet. Auch die seitens der Streckeneinrichtung 5 und der Gleisfreimeldung erkannten Zustände sind so markiert, wie es zur Fig. 1 oben angegeben ist.

In der Darstellung gemäß Fig. 2 befindet sich das frontseitige Ende 9 der Lokomotive 3 bereits weit im Gleisabschnitt 1, während der übrige Teil des Zuges 2 mit seinem rückwärtigen Ende 10 gerade den weiteren Gleisabschnitt 8 verlassen hat. Dieser augenblickliche Zustand des lokomotivenbewegten Zuges 2 wird von der Streckeneinrichtung 5 im Rahmen der Gleisabschnitt-Frei-Überwachung erfasst. Da die Streckeneinrichtung 5 ständig die Position des frontseitigen Endes 9 des lokomotivenbewegten Zuges 2 erfasst und ihr auch die Länge bzw. Position des Gleisabschnitts 1 bekannt ist, kann die Streckeneinrichtung 5 aus der Position des Zuges 2 zum Zeitpunkt des Verlassens des Gleisabschnitts 8 durch das rückwärtige Ende 10 des Zuges 2 unter Berücksichtigung der Länge des Gleisabschnitts 1 die aktuelle Zuglänge Z des Zuges 2 bestimmen. Es kann somit beim Betrieb des Zuges 2 genau festgestellt werden, wann dieser einen Bahnhof oder einen Streckenabschnitt mit beschränkter Geschwindigkeit vollkommen verlassen hat, um dann die Geschwindigkeit zur Beschleunigung bzw. Optimierung des Zugverkehrs mit automatischen Zügen und lokomotivenbewegten Zügen insgesamt zu erhöhen.

Beim Durchführen des erfindungsgemäßen Verfahrens kann sich eine Situation ergeben, wie sie in Fig. 3 gezeigt ist. Diese Situation ist dadurch gekennzeichnet, dass der lokomotivenbewegte Zug 2 auf dem weiteren Gleisabschnitt 8 der Strecke zwei Wagen verloren hat bzw. - wie dargestellt - ein anderer Zug 12 in den weiteren Gleisabschnitt 8 eingefahren ist; in diesem Falle wird eine fiktive Zuglänge Zf ermittelt, die sich vom frontseitigen Ende 9 des Zuges 2 bis zum ersten freien Gleisabschnitt 13 hinter dem anderen Zug 12 erstreckt, wenn der andere Zug 12 länger als eine vorgegebene Zeitdauer den Gleisabschnitt 8 nicht verlassen hat; außerdem wird überprüft, ob die fiktive Zuglänge Zf größer als eine maximal zugelassene Länge der lokomotivenbewegten Züge unter Berücksichtigung ihres jeweiligen Bremsenmodells ist. Die kürzere der beiden Längen wird als ausgewertete Zuglänge Za übernommen. Aufgrund der im Vergleich zur Zuglänge Z größeren, fiktiven Zuglänge Zf bzw. Za beschleunigt der Zug 2 also nach dem Ende eines Streckenabschnitts mit beschränkter Geschwindigkeit entsprechend später. Dies macht sich tatsächlich kaum bemerkbar, weil bei der Ermittlung der Länge Z im ungestörten Betrieb des Zuges 2 Zuschläge beispielsweise wegen Unsicherheiten bei der Freimeldung des weiteren Gleisabschnitts 8 und eines Überhangs zwischen den letzten Achsen im Bereich des hinteren Endes 10 des Zuges 2 bei einer Achszählung gemacht werden.

## Patentansprüche

1. Verfahren zum Durchführen eines automatischen Zugverkehrs mit einer automatischen Zugsteuerung und Zugsicherung mittels Datenkommunikation zwischen einer Bordeinrichtung jeweils eines automatischen Zuges und einer Streckeneinrichtung,
**dadurch gekennzeichnet, dass**
zur Integration eines lokomotivenbewegten Zuges (2) mit Aussendung eines die Frontposition der Lokokmotive (3) bezeichnenden Positionssignals (P) in den automatischen Zugverkehr in der Streckeneinrichtung (5) auf ein empfangenes Positionssignal (P) der Lokomotive (3) des lokomotivenbewegten Zuges (2) eine elektronische Dauermarke (S) fest zugeordnet wird, wodurch der lokomotivenbewegte Zug (2) von der Streckeneinrichtung (5) dauerhaft als ein kurzer automatischer Zug behandelt und der sich jeweils nach hinten erstreckende Teil eines von dem lokomotivenbewegten Zug (2) jeweils befahrenen und mit physikalischen Marken (6) begrenzten Gleisabschnitts (1) blockiert wird.

2. Verfahren nach Anspruch 1,
**dadurch gekennzeichnet, dass**
in der Streckeneinrichtung (5) für die Verfolgung eines lokomotivenbewegten Zuges (2) die Funktion der Überprüfung des hinteren Endes eines automatischen Zuges unwirksam gestellt und zur Separierung aufeinander folgender Züge auf eine Gleisfreimeldung umgeschaltet wird.

3. Verfahren nach Anspruch 1 oder 2,
**dadurch gekennzeichnet, dass**
bei einer Erweiterung auf ein CTC (Continuous Train Control)-Verfahren dem lokomotivenbewegten Zug eine Ausgangslänge zugeordnet wird, die der maximal zugelassenen Länge der lokomotivenbewegten Züge unter Berücksichtigung ihres jeweiligen Bremsmodells entspricht.

4. Verfahren nach einem der vorangehenden Ansprüche,
**dadurch gekennzeichnet, dass**
zur Ermittlung der Zuglänge des lokomotivenbewegten Zuges (2) bei einer Freimeldung über das Verlassen eines weiteren Gleisabschnitts (8) durch den lokomotivenbewegten Zug (2) mittels des dann gesendeten Positionssignals (P) die entsprechende Frontposition der Lokomotive (3) des lokomotivenbewegten Zuges (2) erfasst wird und der Abstand zwischen der erfassten Frontposition und dem gerade verlassenen, weiteren Gleisabschnitt (8) als ermittelte Zuglänge (Z) durch die Streckeneinrichtung (5) dargestellt wird.

5. Verfahren nach Anspruch 4,
**dadurch gekennzeichnet, dass**
die Ermittlung der Zuglänge durch die Streckeneinrichtung (5) jeweils beim Verlassen mehrerer Gleisabschnitte durchgeführt wird.

6. Verfahren nach Anspruch 4,
**dadurch gekennzeichnet, dass**
die Ermittlung der Zuglänge durch die Streckeneinrichtung (5) beim Verlassen jedes Gleisabschnitts (8) durchgeführt wird.

7. Verfahren nach einem der Ansprüche 4 bis 6,
**dadurch gekennzeichnet, dass**
von der Streckeneinrichtung (5) mit dem Fahrbefehl zur Bordeinrichtung der Lokomotive (3) des lokomotivenbewegten Zuges (2) eine Längen-Information über die aktuell ermittelte Länge des lokomotivenbewegten Zuges (2) übermittelt wird und von der Bordeinrichtung diese Längeninformation übernommen wird.

8. Verfahren nach einem der Ansprüche 4 bis 7,
**dadurch gekennzeichnet, dass**
die zuletzt ermittelte aktuelle Länge (Z) des lokomotivenbewegten Zuges (2) verlängert wird, wenn das aufgrund der zuletzt aktuell ermittelten Länge (Z) erwartete Verlassen des jeweiligen weiteren Gleisabschnitts (8) innerhalb einer vorgegebenen Zeitspanne nicht erfolgt ist, wobei die Verlängerung bis zum ersten freien Gleisabschnitt (13) oder um eine Strecke erfolgt, die der maximal zugelassenen Länge der lokomotivenbewegten Züge (2) unter Berücksichtigung ihres jeweiligen Bremsmodells entspricht, je nachdem, welche Längenabmessung kürzer ist.

9. Verfahren nach einem der vorangehenden Ansprüche,
**dadurch gekennzeichnet, dass**
der automatische Zugverkehr nach dem CBTC (Communications-Based Train Control)-Verfahren durchgeführt wird, wobei die Fahrbefehle für die lokomotivenbewegten Züge (2) gemäß den Vorschriften des CBTC-Verfahrens nach den Regeln für automatische Züge gegeben werden.

10. Zugverkehrssystem zum Durchführen eines automatischen Zugverkehrs mit einer automatischen Zugsteuerung und Zugsicherung mittels Datenkommunikation zwischen einer Bordeinrichtung jeweils eines automatischen Zuges und einer Streckeneinrichtung,
**dadurch gekennzeichnet, dass**
zur Integration eines lokomotivenbewegten Zuges (2) mit Aussendung eines die Frontposition der Lokomotive (3) des lokomotivenbewegten Zuges (2) bezeichnenden Positionssignals (P) in den automatischen Zugverkehr die Streckeneinrichtung (5) geeignet, auf ein empfangenes Positionssignal (P) der Lokomotive (3) des lokomotivenbewegten Zug (2) eine elektronische Dauermarke (S) fest zuzuordnen, den lokomotivenbewegten Zug (2) dauerhaft als einen kurzen automatischen Zug zu behandeln und den sich jeweils nach hinten erstreckenden Teil eines von dem lokomotivenbewegten Zug (2) jeweils befahrenen und mit physikalischen Marken (6) begrenzten Gleisabschnitts (1) zu blockieren.

11. Zugverkehrssystem nach Anspruch 10,
**dadurch gekennzeichnet, dass**
die Streckeneinrichtung (5) geeignet ist, bei einer Erweiterung auf ein CTC (Continuous Train Control)-Verfahren dem lokomotivenbewegten Zug (2) eine Ausgangslänge zuzuordnen, die der maximal zugelassenen Länge der lokomotivenbewegten Züge (2) unter Berücksichtigung ihres jeweiligen Bremsmodells entspricht.

12. Zugverkehrssystem nach Anspruch 10 oder 11,
**dadurch gekennzeichnet, dass**
zur Ermittlung der Zuglänge eines lokomotivenbewegten Zuges (2) mit Aussendung eines seine jeweilige Frontposition bezeichnenden Positionssignals (P) die Streckeneinrichtung (5) geeignet ist, auf ein empfangenes Positionssignal (P) bei einer Freimeldung über das Verlassen eines mit physikalischen Marken (6) begrenzten weiteren Gleisabschnitts (8) durch den lokomotivenbewegten Zug (2) mittels des dann gesendeten Positionssignals (P) die entsprechende Frontposition des lokomotivenbewegten Zuges (2) zu erfassen und den Abstand zwischen der erfassten Frontposition und dem gerade verlassenen, weiteren Gleisabschnitt (8) als ermittelte Zuglänge (Z) darzustellen.

13. Zugverkehrssystem nach einem der Ansprüche 10 bis 12,
**dadurch gekennzeichnet, dass** die Streckeneinrichtung (5) geeignet ist, mit dem Fahrbefehl zur Bordeinrichtung des lokomotivenbewegten Zuges (2) eine Längen-Information über die aktuell ermittelte Länge des lokomotivenbewegten Zuges (2) zu übermitteln, und die Bordeinrichtung ist geeignet, diese Längeninformation zu übernehmen.

14. Zugverkehrssystem nach einem der Ansprüche 10 bis 12,
**dadurch gekennzeichnet, dass**
die Streckeneinrichtung (5) geeignet ist, die zuletzt ermittelte aktuelle Zuglänge (Z) des lokomotivenbewegten Zuges (2) zu verlängern, wenn das aufgrund der zuletzt aktuell ermittelten Länge (Z) erwartete Verlassen des jeweiligen weiteren Gleisabschnitts (8) innerhalb einer vorgegebenen Zeitspanne nicht erfolgt ist, wobei die Verlängerung bis zum ersten freien Gleisabschnitt (13) oder um eine Strecke erfolgt, die der maximal zugelassenen Länge der lokomotivenbewegten Züge (2) unter Berücksichtigung ihres jeweiligen Bremsmodells entspricht, je nachdem, welche Längenabmessung kürzer ist.

## Claims

1. Method for implementing automatic railway traffic with an automatic train control system and train protection by means of data communication between an on-board device in each case of an automatic train and a trackside device,
**characterised in that**,
in order to integrate a locomotive-operated train (2) with emission of a position signal (P) designating the front position (P) of the locomotive (3) into the automatic railway traffic, an electronic permanent stamp (S) is fixedly assigned to the locomotive (3) of the locomotive-operated train (2) in the trackside device (5) in response to a received position signal (P), as a result of which the locomotive-operated train (2) is permanently treated as a short automatic train by the trackside device (5) and the part of a track section (1) which extends rearwards in each case and is traversed in each case by the locomotive-operated train (2) and bounded with physical markers (6) is blocked.

2. Method according to claim 1,
**characterised in that**
in the trackside device (5) for tracking a locomotive-operated train (2) the function of checking the rear end of an automatic train is deactivated and a switch to a track vacancy detection is carried out in order to separate consecutive trains.

3. Method according to claim 1 or 2,
**characterised in that**
an initial length is assigned to the locomotive-operated train upon expansion to a CTC (Continuous Train Control) method, said initial length corresponding to the maximum permissible length of the locomotive-operated trains by taking their respective braking model into account.

4. Method according to one of the preceding claims,
**characterised in that**
in order to determine the train length of the locomotive-operated train (2) upon a vacancy detection by way of the locomotive-operated train (2) leaving a further track section (8) by means of the then sent position signal (P), the corresponding front position of the locomotive (3) of the locomotive-operated train (2) is detected and the distance between the detected front position and the just left further track section (8) is shown as a determined train length (Z) by the trackside device (5).

5. Method according to claim 4,
**characterised in that**
the train length is determined by the trackside device (5) in each case when leaving a number of track sections.

6. Method according to claim 4,
**characterised in that**
the determination of the train length is carried out by the trackside device (5) when leaving each track section (8).

7. Method according to one of claims 4 to 6,
**characterised in that**
an item of length information relating to the currently determined length of the locomotive-operated train (2) is transmitted by the trackside device (5) with the movement command to the on-board device of the locomotive (3) of the locomotive-operated train (2) and this item of length information is taken over by the on-board device.

8. Method according to one of claims 4 to 7,
**characterised in that**
the last determined current length (Z) of the locomotive-operated train (2) is extended if the leaving of the respective further track section (8), expected on account of the last currently determined length (Z), is not carried out within a predetermined time frame, wherein the extension takes place up to the first free track section (13) or by a distance which corresponds to the maximum permissible length of the locomotive-operated trains (2) by taking their respective braking model into account, depending on which length dimension is shorter.

9. Method according to one of the preceding claims,
**characterised in that**
the automatic railway traffic is carried out according to the CBTC (Communications Based Train Control) method, wherein the movement commands for the locomotive-operated trains (2) are provided in accordance with the specifications of the CBTC method as per the rules for automatic trains.

10. Railway traffic system for implementing automatic railway traffic with an automatic train control system and train protection by means of data communication between an on-board device in each case of an automatic train and a trackside device,
**characterised in that**
in order to integrate a locomotive-operated train (2) with emission of a position signal (P) designating the front position of the locomotive (3) of the locomotive-operated train (2) into the automatic railway traffic, the trackside device (5) is suited to fixedly assigning an electronic permanent stamp (S) to the locomotive (3) of the locomotive-operated train (2) in response to a received position signal (P), to treat the locomotive-operated train (2) permanently as a short automatic train and to block the part of a track section (1) which extends rearwards in each case and is traversed in each case by the locomotive-operated train (2) and bounded with physical markers (6).

11. Railway traffic system according to claim 10,
**characterised in that**
the trackside device (5) is suited to assigning an initial length to the locomotive-operated train (2) upon expansion to a CTC (Continuous Train Control) method, said initial length corresponding to the maximum permissible length of the locomotive-operated trains (2) by taking their respective braking model into account.

12. Railway traffic system according to claim 10 or 11,
**characterised in that**
in order to determine the train length of a locomotive-operated train (2) with emission of a position signal (P) designating its respective front position, the trackside device (5) is suited to detecting the corresponding front position of the locomotive-operated train (2) by means of the then sent position signal (P) in response to a received position signal (P) upon a vacancy detection by way of the locomotive-operated train (2) leaving a further track section (8) bounded with physical markers (6) and to display the distance between the detected front position and the just left, further track section (8) as a determined train length (Z) .

13. Railway traffic system according to one of claims 10 to 12, **characterised in that** the trackside device (5) is suited to transmitting an item of length information relating to the currently determined length of the locomotive-operated train (2) with the movement command to the on-board device of the locomotive-operated train (2) and the on-board device is suited to taking over this item of length information.

14. Railway traffic system according to one of claims 10 to 12,
**characterised in that**
the track device (5) is suited to extending the last determined current train length (Z) of the locomotive-operated train (2) when the leaving of the respective further track section (8), expected as a result of the last currently determined length (Z), is not carried out within a predetermined time frame, wherein the extension is carried out up to the first free track section (13) or by a distance which corresponds to the maximum permissible length of the locomotive-operated trains (2) by taking their respective braking model into account, depending on which length dimension is shorter.

## Revendications

1. Procédé de mise en oeuvre d'une circulation automatique de train, comprenant une commande automatique de train et un arrêt automatique de train, au moyen d'une communication de données entre un dispositif de bord respectivement d'un train automatique et un dispositif de voie,
**caractérisé en ce que**
pour l'intégration d'un train (2), mis en mouvement par locomotive, par émission d'un signal (P) de position indiquant la position avant de la locomotive (3) dans la circulation automatique des trains, on associe fixement, à la réception d'un signal (P) de position dans le dispositif (5) de voie, un repère (S) électronique permanent à la locomotive (3) du train (2) mis en mouvement par locomotive, grâce à quoi le train (2) mis en mouvement par locomotive est traité par le dispositif (5) de voie, d'une manière permanente, comme un train automatique court et la partie, s'étendant vers l'arrière, d'un tronçon de voie ferrée parcouru par le train (2) mis en mouvement par locomotive et délimité par des repères (6) physiques, est bloquée.

2. Procédé suivant la revendication 1,
**caractérisé en ce que**
dans le dispositif (5) de voie, pour le suivi d'un train (2) mis en mouvement par locomotive, on rend inefficace le fonctionnement du contrôle de l'extrémité arrière d'un train automatique et, pour la séparation de trains se succédant, on passe à un contrôle de libération de voie.

3. Procédé suivant la revendication 1 ou 2,
**caractérisé en ce que**,
pour une extension à un procédé CTC (Continuous Train Control), on associe, au train mis en mouvement par locomotive, une longueur initiale, qui correspond à la longueur admise au maximum des trains mis en mouvement par locomotive, en tenant compte de leur modèle de frein respectif.

4. Procédé suivant l'une des revendications précédentes,
**caractérisé en ce que**,
pour déterminer la longueur du train (2) mis en mouvement par locomotive, lors d'un contrôle de libération suivant lequel le train (2) mis en mouvement par locomotive a quitté un autre tronçon (8) de voie ferrée, on détecte, au moyen du signal (P) de position envoyé alors, la position avant correspondante de la locomotive (3) du train (2) mis en mouvement par locomotive et on représente la distance, entre la position avant détectée et l'autre tronçon (8) de voie ferrée, qui vient juste d'être quitté, comme étant la longueur (Z) de train, qui a été déterminée par le dispositif (5) de voie.

5. Procédé suivant la revendication 4,
**caractérisé en ce que**
l'on effectue la détermination de la longueur du train par le dispositif (5) de voie, respectivement, lorsque l'on quitte plusieurs tronçons de voie ferrée.

6. Procédé suivant la revendication 4,
**caractérisé en ce que**
l'on effectue la détermination de la longueur du train par le dispositif (5) de voie, lorsque l'on quitte chaque tronçon (8) de voie ferrée.

7. Procédé suivant l'une des revendications 4 à 6,
**caractérisé en ce qu'**
il est transmis, par le dispositif (5) de voie, avec l'instruction de roulement, au dispositif de bord de la locomotive (3) du train (2) mis en mouvement par locomotive, une information de longueur sur la longueur déterminée instantanément du train (2) mis en mouvement par locomotive et cette information de longueur est prise en charge par le dispositif de bord.

8. Procédé suivant l'une des revendications 4 à 7,
**caractérisé en ce que**
la longueur (Z) instantanée déterminée en dernier du train (2) mis en mouvement par locomotive est augmentée si le train ne quitte pas, comme escompté en raison de la longueur (Z) déterminée instantanément en dernier, l'autre tronçon (8) de voie dans un laps de temps donné à l'avance, l'augmentation s'effectuant jusqu'au premier tronçon (13) de voie libre ou d'une section, qui correspond à la longueur autorisée au maximum des trains (2) mis en mouvement par locomotive, en tenant compte de leur modèle de frein respectif, selon la dimension en longueur, qui est la plus petite.

9. Procédé suivant l'une des revendications précédentes,
**caractérisé en ce que**
l'on effectue la circulation automatique des trains suivant le procédé CBTC (Communications-Based Train Control), les instructions de roulement des trains (2) mis en mouvement par locomotive étant données selon les prescriptions du procédé CBTC suivant les règles pour des trains automatiques.

10. Système de circulation de train pour effectuer une circulation automatique de train, comprenant une commande automatique de train et un arrêt automatique de train, au moyen d'une communication de données entre un dispositif de bord d'un train automatique et un dispositif de voie,
**caractérisé en ce que**,
pour l'intégration d'un train (2) mis en mouvement par locomotive, avec envoi d'un signal (P) de position, indiquant la position avant de la locomotive (3) du train (2) mis en mouvement par locomotive dans la circulation automatique de train, le dispositif (5) de voie est propre, à la réception d'un signal (P) de position, à associer fixement à la locomotive (3) du train (2) mis en mouvement par locomotive un repère (S) électronique permanent, à traiter le train (2) mis en mouvement par locomotive d'une manière permanente comme un train automatique court et à bloquer la partie, s'étendant vers l'arrière, d'un tronçon (1) de voie ferrée parcouru par le train (2) mis en mouvement par locomotive et délimité par des repères (6) physiques.

11. Système de circulation de train suivant la revendication 10,
**caractérisé en ce que**
le dispositif (5) de voie est propre, lors d'une extension à un procédé CTC (Continuous Train Control), à associer, au train (2) mis en mouvement par locomotive, une longueur initiale, qui correspond à la longueur admise au maximum des trains (2) mis en mouvement par locomotive, en tenant compte de leur modèle de frein respectif.

12. Système de circulation de train suivant la revendication 10 ou 11,
**caractérisé en ce que**,
pour déterminer la longueur d'un train (2) mis en mouvement par locomotive, par émission d'un signal (P) de position indiquant sa position avant, le dispositif (S) de voie est propre, à la réception d'un signal (P) de position, lors d'un contrôle de libération suivant lequel le train (2) mis en mouvement par locomotive a quitté un autre tronçon (8) de voie ferrée, délimité par des repères (6) physiques, à détecter, au moyen du signal (P) de position envoyé, la position avant correspondante du train (2) mis en mouvement par locomotive, et à représenter la distance entre la position avant détectée et l'autre tronçon (8) de voie, qui vient juste d'être quitté, comme longueur (Z) de train qui a été déterminée.

13. Système de circulation de train suivant l'une des revendications 10 à 12,
**caractérisé en ce que**
le dispositif (5) de voie est propre, par l'instruction de roulement envoyée au dispositif de bord du train (2) mis en mouvement par locomotive, à transmettre une information de longueur sur la longueur déterminée instantanément du train (2) mis en mouvement par locomotive et le dispositif de bord est propre à prendre en charge cette information de longueur.

14. Système de circulation de train suivant l'une des revendications 10 à 12,
**caractérisé en ce que** le dispositif (5) de voie est propre à augmenter la longueur (Z) instantanée déterminée en dernier du train (2) mis en mouvement par locomotive, si quitter, comme escompté en raison de la longueur (Z) déterminée instantanément en dernier, l'autre tronçon (8) de voie n'est pas effectué en un laps de temps donné à l'avance, l'augmentation s'effectuant jusqu'au premier tronçon (13) de voie libre ou d'une section, qui correspond à la longueur admise au maximum des trains (2) mis en mouvement par locomotive, en tenant compte de leur mode de frein respectif, selon la dimension en longueur, qui est la plus courte.
